# EUROPÄISCHE PATENTSCHRIFT

(11) **EP 1 653 308 B1**
(45) Veröffentlichungstag und Bekanntmachung des Hinweises auf die Patenterteilung: **27.07.2011**
(21) Anmeldenummer: 04025808.9
(22) Anmeldetag: 29.10.2004
(51) Int. Cl.: G05B 19/05

(54) **System und Verfahren zur Speicherung und Bereitstellung von Informationen**
Method and apparatus for providing and storing information
Procédé et dispositif pour enregistrer et mettre à disposition des informations

(43) Veröffentlichungstag der Anmeldung: 03.05.2006
(73) Patentinhaber: SIEMENS AKTIENGESELLSCHAFT, 80333 München (DE)
(72) Erfinder: Thurner, Elmar, 90491 Nürnberg (DE)

(56) Entgegenhaltungen:
- EP-B- 1 256 861
- WO-A1-01/12374
- US-A1- 2002 193 905

## Beschreibung

System und Verfahren zur Speicherung und Bereitstellung von Informationen

Die Erfindung betrifft ein System sowie ein Verfahren zur Speicherung und Bereitstellung von Informationen. Das System weist mindestens eine Komponente und Bereitstellungsmittel zur Bereitstellung von der Komponente zugeordneten Informationen sowie Speichermittel zur Speicherung der Informationen auf, wobei die Bereitstellungsmittel Zugriff auf die mit den Speichermitteln gespeicherten Informationen haben und wobei die Bereitstellungsmittel zur Bereitstellung der Informationen innerhalb einer Zugriffszeit vorgesehen sind.

Die EP 1 256 861 B1 beschreibt ein industrielles Steuerungssystem mit mehreren Steuervorrichtungen und einer oder mehreren Bedieneinrichtungen, die so arbeiten, dass sie einen industriellen Prozess überwachen und steuern, und einem Web-Zugangsmodul, das mit den Steuervorrichtungen und Bedieneinrichtungen verbunden ist, wobei das Web-Zugangsmodul dazu ausgelegt ist, Datenübermittelungen zwischen dem Web-Zugangsmodul und einer entfernten Vorrichtung über das Internet zu ermöglichen. Dabei ist das Web-Zugangsmodul dazu ausgelegt, Daten und Programme, z. B. Programmiersoftware zu erlangen, die auf zumindest einer der Steuervorrichtungen verwendet werden können, z. B. zur Erzeugung eines Steuerprogramms. Das Web-Zugangsmodul weist eine Prozessoreinrichtung auf, die die Daten zur entfernten Vorrichtung sendet und Datenübermittlungen betreffend das Steuerungsprogramm von der entfernten Vorrichtung über das Internet empfängt, wobei das Steuerprogramm in der entfernten Vorrichtung unter Verwendung der Programmiersoftware erzeugt wird.

Der Erfindung liegt die Aufgabe zugrunde, die Bereitstellung von einer Komponente zugeordneten Informationen zu vereinfachen und gleichzeitig Zugriffsbedingungen einzuhalten.

Diese Aufgabe wird durch ein System zur Speicherung und Bereitstellung von Informationen gelöst, mit mindestens einer Komponente, mit Speichermitteln zur Speicherung der Informationen, mit Bereitstellungsmitteln, wobei die Bereitstellungsmittel Zugriff auf die mit den Speichermitteln gespeicherten Informationen haben, wobei die Bereitstellungsmittel zur Bereitstellung der Informationen innerhalb einer Zugriffszeit vorgesehen sind, wobei die Speichermittel für der Komponente zugeordnete Informationen von der Komponente entfernt angeordnet sind, wobei die Komponenten und/oder die Informationen mindestens ein automatisch lesbares Identifikationsmerkmal aufweisen und wobei den Informationen mindestens ein Attribut zuordenbar ist, wobei das Attribut einen Zugriffsparameter beinhaltet.

Diese Aufgabe wird durch ein Verfahren zur Speicherung und Bereitstellung von Informationen gelöst, bei welchem mit Bereitstellungsmitteln Informationen innerhalb einer Zugriffszeit bereitgestellt werden, wobei die Informationen mit SpeiChermitteln gespeichert werden, wobei die Bereitstellungsmittel Zugriff auf die mit den Speichermitteln gespeicherten Informationen haben, wobei die Speichermittel für der Komponente zugeordnete Informationen von der Komponente entfernt angeordnet werden, wobei die Komponenten und/oder die Informationen mindestens ein automatisch lesbares Identifikationsmerkmal aufweisen und wobei den Informationen mindestens ein Attribut zugeordnet wird, wobei das Attribut einen Zugriffsparameter beinhaltet.

Die Erfindung beruht auf der Erkenntnis, dass die einer Komponente zugeordneten Informationen nicht alle mit denselben Zugriffsbedingungen bereitstellbar sein müssen. Andererseits sind in komplexen Systemen häufig Komponenten, Speichermittel und Bereitstellungsmittel (z. B. Netzwerke) in großer Zahl und mit sehr unterschiedlichen Geschwindigkeiten, Speichervolumina und Verfügbarkeiten vorhanden, die im Verbund vorteilhaft genutzt werden können. So gibt es Informationen, z. B. Alarmmeldungen, welche innerhalb einer sehr kurzen Zugriffszeit bereitzustellen sind, wohingegen die Zugriffszeit für andere Informationen, z. B. Hilfetexte, kein kritischer Faktor ist. Gemäß der Erfindung wird den Informationen mindestens ein einen Zugriffsparameter beschreibendes Attribut zugeordnet. Damit wird ein wichtiges Unterscheidungsmerkmal bezüglich der Informationen bereitgestellt. Die Bereitstellung der Informationen kann somit in Abhängigkeit von dem Attribut bzw. den Attributen erfolgen. Das Attribut ist ein maschinenlesbares Attribut, insbesondere ist es durch die Bereitstellungsmittel lesbar. Das Attribut beschreibt einen Zugriffsparameter, ein Zugriffsparameter definiert Zugriffsbedingungen. Die Komponenten selbst können auch Bereitstellungsmittel enthalten, welche von anderen Komponenten im System zugreifbar sind. Zur leichteren Identifikation der Komponente und/oder von zur Komponente gehörenden Informationen wird vorgeschlagen, dass die Komponenten und/oder die Informationen jeweils ein eindeutiges, automatisch erfassbares Identifikationsmerkmal aufweisen. Dieses Identifikationsmerkmal kann dann im System verwendet werden, um die zur Komponente gehörenden Informationen bzw. Aktualisierungen von Informationen automatisch zu finden und bei Bedarf bereitzustellen. Die Identifikationsmerkmale der Komponenten bzw. die Identifikationsmerkmale von zur Komponente gehörenden Informationen sowie deren Attribute werden auf der Komponente und/oder bei der Verwendungsstelle der Informationen, z. B. einer Mensch-Maschine-Schnittstelle (HMI), gespeichert. Die Attribute sind den Informationen zugeordnet, d. h. sie sind direkt mit den Informationen verknüpft und im selben Speichermittel gespeichert. Die Zuordnung der Attribute zu den Informationen kann aber auch dergestalt erfolgen, dass die Attribute dem Identifikationsmerkmal der jeweiligen Informationen, welches z. B. in einem Bereitstellungsmittel getrennt von den Informationen gespeichert ist, zugeordnet ist und somit die Zuordnung zu den Informationen indirekt über das Identifikationsmerkmal erfolgt.

Gemäß vorteilhaften Ausgestaltungen der Erfindung bestimmt der Zugriffsparameter eine maximal zulässige Zugriffszeit, eine minimal erforderliche Zugriffsverfügbarkeit, eine topologische Zugehörigkeit und/oder einen erforderlichen Speicherplatz der Informationen.

Gemäß einer weiteren vorteilhaften Ausgestaltung der Erfindung sind die Speichermittel des Systems für Informationen in Abhängigkeit von dem zugeordneten Attribut bzw. den zugeordneten Attributen durch das System automatisch festlegbar. Die Speichermittel und damit Speicherorte im System für die Speicherung von Informationen in Abhängigkeit von den zugeordneten Attributen sind somit durch das System automatisch auswählbar. Beispielsweise sind die Speichermittel und somit der Speicherort der Informationen in Abhängigkeit der zugeordneten und im Attribut gespeicherten, maximal zulässigen Zugriffszeit durch das System automatisch festlegbar. So ist z. B. bei einer relativ kleinen maximal zulässigen Zugriffszeit ein Speicherort in den Speichermitteln festlegbar, welcher einen relativ schnellen Zugriff der Bereitstellungsmittel auf die in den Speichermitteln gespeicherten Informationen ermöglicht. Bei einer relativ großen maximal zulässigen Zugriffszeit kann der Speicherort in den Speichermitteln derart festgelegt werden, dass der Zugriff auf die Informationen durch die Bereitstellungsmittel relativ langsam erfolgt. Die Bereitstellung der Informationen kann auch anhand der durch das Attribut bestimmten erforderlichen Zugriffsverfügbarkeit erfolgen. Wenn der Speicherort der Informationen in Abhängigkeit der zugeordneten und in einem Attribut gespeicherten, minimal erforderlichen Zugriffsverfügbarkeit durch das System automatisch festlegbar ist, kann z. B. bei besonders hohen Anforderungen an die minimal erforderliche Zugriffsverfügbarkeit ein Speicherort in den Speichermitteln gewählt werden, der einen Zugriff der Bereitstellungsmittel auf die Informationen mit hoher Zuverlässigkeit ermöglicht oder die Informationen können durch das System automatisch mehrfach in mehreren Speicherorten abgelegt werden. Zusätzlich kann eine Referenz auf die Verwendungsstelle im System, also auf den Systembestandteil, an welchem die Informationen weiterverarbeitet oder angezeigt werden sollen, z. B. ein oder mehrere Bereitstellungsmittel, den Informationen zugeordnet werden. Die Referenz kann zum Beispiel direkt mit den Informationen abgespeichert sein, so dass das System einen möglichen Speicherort der Informationen bestimmen kann. Alternativ kann die Referenz im Bereitstellungsmittel selbst gespeichert sein.

Eine besondere effektive Ausnutzung der vorhandenen Speichermittel lässt sich dadurch erreichen, dass den Informationen ein Speicherplatzbedarf als Attribut zuordenbar ist, insbesondere wenn der Speicherort der Informationen in Abhängigkeit des zugeordneten Speicherplatzbedarfs durch das System automatisch festlegbar ist. Vorteilhafterweise ist den Informationen eine topologische Zugehörigkeit, d. h. eine Topologie- bzw. Autonomieinformation als Attribut zuordenbar. Der Speicherort der Informationen (d. h. die Auswahl der am besten geeigneten Speichermittel im System) kann durch das System in Abhängigkeit dieses zugeordneten und maschinenlesbaren Attributs erfolgen, z. B. dergestalt, dass Teilanlagen, Linien, Strängen, Baugruppen bezüglich Tausch, Umrüstungen, Reparatur, Wartung unabhängig von anderen Teilanlagen, Linien, Strängen, Baugruppen sind.

Gemäß einer weiteren vorteilhaften Ausgestaltung der Erfindung ist die Komponente Teil eines industriellen Automatisierungssystems. Mit dem dargestellten System bzw. dessen Ausgestaltungen lassen sich die speziellen Anforderungen bezüglich Zugriffszeit, Verfügbarkeit und Speicherplatzbeschränkungen bei der Informationsbereitstellung innerhalb industrieller Automatisierungssysteme erfüllen.

Die Komponente kann gemäß weiteren vorteilhaften Ausgestaltungen der Erfindung sowohl als elektronische Komponente, d. h. als Hardware, als auch als Softwarekomponente ausgeführt sein.

Zur berührungslosen Erfassung des Identifikationsmerkmals wird gemäß einer weiteren vorteilhaften Ausgestaltung der Erfindung vorgeschlagen, dass das Identifikationsmerkmal als Radio Frequency Identification Tag (RFID-Tag) ausgeführt ist. Eine besonders leichte Zuordnung der Informationen zu der Komponente lässt sich erreichen, wenn gemäß einer vorteilhaften Ausgestaltung der Erfindung Mittel vorgesehen sind, welche die Zuordnung der Informationen der Komponente anhand des Identifikationsmerkmals erlauben. Der durch das RFID Tag bzw. dem von der Komponente ausgelesenen Identifikationsmerkmal sichergestellte eindeutige Bezug von Komponente zur Information garantiert insbesondere, dass die richtige Version der Information zur Verfügung steht, vermeidet Fehlinstallationen und erleichtert für einen Anwender den Zugriff auf die benötigten Informationen.

Damit die Informationen einem Anwender komfortabel bereitstellbar sind, weisen die Bereitstellungsmittel gemäß einer vorteilhaften Ausgestaltung der Erfindung eine Mensch-Maschine-Schnittstelle auf.

Vorteilhafterweise nutzen die Bereitstellungsmittel ein Internet. Das ist insbesondere dann von Vorteil, wenn die Bereitstellungsmittel gemäß einer weiteren vorteilhaften Ausgestaltung der Erfindung einen Web Service aufweisen. Der Bezug von Informationen zu Komponenten über einen Web Service statt physikalisch direkt von der jeweiligen Komponente vermeidet Kosten für Speichermittel (z. B. FLASH, Secure Digital Card, etc.) in der Komponente, obwohl die Vorteile des Datenabrufs von der Komponente erhalten bleiben (Handlingvorteile, Konsistenzgarantie). Ein Anwender kann komponentenspezifische Informationen scheinbar direkt bei der Komponente abrufen bzw. dort ablegen, obwohl in der Komponenten dafür kein Speicher benötigt wird, da im Netz ein so genannter "Device Attached Virtual Storage" zur Verfügung gestellt wird. Ein einziger Service kann somit für alle Versionen aller Komponenten alle Informationen (z. B. Software, Dokumentation, Training, Bestellinformation, Diagnosemuster, Vertriebspartner etc.) vorrätig halten und bei Bedarf komponentenbezogen liefern. Dadurch entsteht Zeitersparnis durch Entfall der Suche nach verschiedenen Bezugsquellen je nach Art der Information. Des Weiteren entsteht Kostenersparnis durch Entfall der individuellen Einzelspeicher für Software, Konfiguration, Schulungsdaten etc.

Zur Erhöhung der Zuverlässigkeit und Verfügbarkeit der Informationsbereitstellung sind die Bereitstellungsmittel vorteilhafterweise als Peer-to-Peer-Netzwerk ausgeführt. Insbesondere wird vorgeschlagen, dass die Speichermittel von der Komponente entfernt angeordnet und/oder die Informationen verteilt speicherbar sind. Ein Netzwerk wird als Peer-to-Peer-Netzwerk bezeichnet, wenn jeder Netzwerkteilnehmer sowohl Informationsanbieter als auch Informationskonsument sein kann. Dabei weisen die Teilnehmer eine weitgehende Autonomie auf. Ein Peer-to-Peer-Netzwerk erlaubt eine Informationsübertragung auch bei fast beliebigen Unterbrechungen des Netzwerks.

Gemäß einer weiteren vorteilhaften Ausgestaltung der Erfindung sind die Informationen Nicht-Echtzeit-Daten (Non Realtime), insbesondere Lizenzierungsdaten. Die Verwendung eines fest mit der Komponente verbundenen maschinenlesbaren Identifikationsmerkmals der Komponente zur Abfrage der Lizenz für die komponentenbezogenen Informationen ermöglicht die indirekte Vermarktung von Informationen in Form von Hardware, obwohl die komponentenbezogenen Informationen global und jederzeit "on demand" verwendbar sind. Das Eintippen von Lizenznummern entfällt, weil die Komponente selbst den Lizenzschlüssel für die Information enthalten kann, und zwar auch dann, wenn die Information nicht an der Komponente, sondern z. B. an einem externen Rechner verwendet wird. Eine komponentenbezogene Lizenzierung von komponentenbezogenen Informationen wird somit ermöglicht.

Die Verfügbarkeit der Informationsbereitstellung lässt sich weiter steigern, wenn die Informationen redundant speicherbar sind.

Die Sicherheit der Informationsbereitstellung erhöht sich, wenn die Informationen verschlüsselt speicherbar bzw. übertragbar sind. Die vollständige Übertragung bzw. Bereitstellung der Informationen wird sichergestellt, wenn die Informationen transaktional übertragbar sind. Transaktional bedeutet, dass logisch zusammengehörende Operationen erst nach erfolgter Bestätigung auf einmal ausgeführt werden (ganz oder gar nicht). Im Falle eines Problems (z. B. durch einen Netzwerkfehler) während der Übertragung wird automatisch wieder der Zustand zu Beginn der Übertragung hergestellt.

Gemäß einer weiteren vorteilhaften Ausgestaltung der Erfindung können die Informationen einem oder mehreren Verarbeitungsmitteln zugeordnet und diese Zuordnungen bzw. zugeordneten Information mit einem oder mehreren der oben genannten Attributen versehen werden. Verarbeitungsmittel sind Systembestandteile, an welchen die Informationen weiterverarbeitet oder angezeigt werden sollen. So können z. B. ein oder mehrere Bereitstellungsmittel und/oder Komponenten auch Verarbeitungsmittel beinhalten oder die Verarbeitungsmittel sind an diese gekoppelt. Durch die Zuordnung von Informationen zu Verarbeitungsmitteln wird festgelegt, welche Verarbeitungsmittel potentiell auf welche Informationen zugreifen und diese Zuordnungen können durch die Attribute näher beschrieben werden. In anderen Worten heißt das, dass für jedes Verarbeitungsmittel für die beim Verarbeitungsmittel benötigte Information durch Attribute festgelegt werden kann, welche Zugriffszeit, Verfügbarkeit, Autonomie und Speichergröße beim Zugriff auf die Information benötigt wird.

Nachfolgend wird die Erfindung anhand der in den Figuren dargestellten Ausführungsbeispiele näher beschrieben und erläutert.

Es zeigen:
- FIG 1: ein System zur Bereitstellung von Informationen,
- FIG 2: ein solches System, bei welchem Speichermittel über das Internet zugänglich sind,
- FIG 3: ein solches System mit als Peer-to-Peer-System ausgeführten Bereitstellungsmitteln,
- FIG 4: die Vernetzung von Bereitstellungsmitteln in einem selbst organisierenden Overlay-Netzwerk und
- FIG 5: die Aufteilung von Informationen in Blöcke.

Mit dem Begriff Komponenten werden hier Geräte, Baugruppen und Softwaremodule insbesondere für die Automatisierung bezeichnet, z. B. speicherprogrammierbare Steuerungen (SPS), Kommunikationsprozessoren, Funktionsmodule, Anschaltungen, Input/Output-Module, Schnittstellenbaugruppen, Feldgeräte, etc. Im Rahmen des Lebenszyklus dieser Komponenten sollen mehrfach komponentenbezogene Informationen bei Bedarf in der jeweils aktuell passenden Version und in der gewünschten Sprache bereitgestellt werden. Die Informationen werden dabei einem Anwender, einem Client, einem Browser, einem Anwendungsprogramm und/oder der Komponente selbst zur Verfügung gestellt. Diese Informationen, auch als elektronische Inhalte oder Daten bezeichnet, umfassen beispielsweise: mensch- und/oder maschinenlesbare Beschreibungen von Baugruppen, Maschinen und Anlagen, Dokumentation, Trainings-Videos, augmentierte Anleitungen, Zertifizierungen, Konfigurationsdaten, Wartungsdaten, Meldetexte, applikationsspezifische Alarme, Meldungen, Diagnose-Referenzmuster, Verwendungshistorien, verdichtete Anlagendaten, Bestellinformationen, Vertriebspartnerinfo, Anwendungsprogramme, Engineeringsoftware, Konfigurationssoftware, Optionspakete, Firmware, Firmware-Updates, etc.

An die Informationen bzw. die Bereitstellung der Informationen werden abhängig von der Art der Information unterschiedliche Anforderungen gestellt. So sollen einige dieser Informationen direkt am Gerät oder in definierten Teilanlagen vorgehalten und dort aktualisiert werden, zur Sicherstellung der Unabhängigkeit der Baugruppe, des Strangs bzw. der Teilanlage. Teilweise müssen die Informationen für den Betrieb der Anlage garantiert verfügbar sein (z. B. Meldetexte oder Selbstbeschreibungsdaten für Plug and Play von Geräten). Manche Informationen müssen im Betrieb von Automatisierungssystemen in Echtzeit, d. h. mit harten Zeitbedingungen, zur Verfügung gestellt werden (z. B. müssen Texte von Alarmmeldungen unmittelbar beim Auftreten des Alarms mit angezeigt werden). Informationen sollen mit garantierter anlagenweiter Konsistenz zur Verfügung gestellt werden bzw. in die Geräte geladen werden (z. B. müssen die kompilierten Anwendungsprogramme der Steuerungen zu den Konfigurationsdaten und Parametern der Anlage/Teilanlage passen). Manche der Informationen sollen lizenziert werden.

Des Weiteren müssen die Speicherplatzbeschränkungen auf den Geräten (meist in der Größenordnung einiger Megabyte auf den Baugruppen, welche keine beweglichen Speicher wie z. B. Festplatten aufweisen) und die Restriktionen bzgl. Zugriffsgeschwindigkeit über die Netze im Automatisierungssystem eingehalten werden (meist niedrig insbesondere bei besonders gefährdeten Anlagen).

Gemäß dem Stand der Technik sind Automatisierungsbaugruppen und -geräte auf die deterministische Verarbeitung von Daten in Hard-Realtime optimiert. Soft-Realtime- und Non-Realtime-Daten werden von Automatisierungsbaugruppen bisher nur in sehr kleinen Mengen und mit minimalen Systemfunktionen zur Verfügung gestellt bzw. verarbeitet. Die Programmierung, Konfiguration, Analyse, Bedienung, Diagnose, Schulung, Zertifizierung etc. von Automatisierungsgeräten erfolgt unter Verwendung von PCs, PDAs, Mobiltelefonen, die an die Automatisierungsgeräte direkt oder indirekt (über Netzwerk) angeschlossen werden und auf denen entsprechende Engineering-, Konfigurations-, Bedien-, Instandhaltungs-, Parametrier-Software läuft, und die die genannten komponentenbezogenen Informationen verarbeiten. Einzelne elektronische Inhalte (z. B. Parameterwerte) werden vom Automatisierungsgerät auf das Client-Gerät gelesen, dort verarbeitet und ins Gerät geschrieben.

Die meisten komponentenbezogenen Inhalte, insbesondere umfangreichere wie z. B. Konfigurationssoftware, Gerätebeschreibungen, Anleitungen in verschiedenen Sprachen, Informationen zu feingranularen Teilen von Geräten wie Meldungstexte, Konfigurationsdaten inklusive symbolischer Namen und Kommentaren etc. sind bisher nicht vom Automatisierungsgerät abrufbar, sondern nur von anderen, je nach Art der Daten unterschiedlichen Quellen, z. B. einer Internetseite des Baugruppenherstellers, dem Engineeringarbeitsplatz, Compact Disks, etc. Mit dem Vordringen von Technologien wie Web, Plug and Play, symbolischer Programmierung, Zero-Installation-Engineering Clients und vertikaler Integration in die Geräte und Baugruppen der Automatisierungssysteme wird die Menge an Non-Realtime- und Soft-Realtime-Daten, die komponentenbezogen gehandhabt werden sollen oder auf den Geräten gespeichert werden sollen, weiter anwachsen. Für diese Daten gibt es bisher kein System oder Verfahren für Speicherung, Zugriff und Übertragung, das die besonderen Anforderungen der industriellen Umgebung erfüllt.

Auf den Automatisierungsgeräten gespeicherte Informationen verursachen Kosten für Speicher (insbesondere wenn der selbe Inhalt auf jeder Baugruppe wiederholt gespeichert wird) und Zugriffsmechanismen. Mengenbeschränkungen bestehen insbesondere für kleine Automatisierungsgeräte oder Peripheriebaugruppen. Zudem besteht Aktualisierungsaufwand.

Für gerätebezogenen Inhalt, der nicht auf den Geräten gespeichert wird, muss der Inbetriebsetzer, Bediener oder das Servicepersonal wissen, wo welcher baugruppenbezogene Inhalt für welches Gerät bereitgestellt wird. Der jeweilige Anwender muss selbst ermitteln ob der Inhalt aktuell ist. Dies ist zeitaufwändig. Es kann zu folgenschweren Inkonsistenzen zwischen Komponenten und komponentenspezifischen Inhalten kommen (falsche Firmware, fehlerhafte Projektierung, veraltete Dokumentation). Ein nicht in der Komponente gespeicherter Inhalt kann nicht durch die Komponente indirekt lizenziert werden.

Auch für Daten die heute bereits auf Automatisierungsgeräten gespeichert werden, wie z. B. Konfigurationsdaten, entstehen heute hohe Aufwendungen für Updates. So müssen z. B. in einer Anlage die gesamten Konfigurationsdaten aller Bedienpanel (bis zu einigen hundert) aktualisiert werden, wenn auch nur ein einziger auf allen Panels vorkommender Meldungstext oder ein Bild um ein einziges Zeichen zu ändern ist. Mit dem dargestellten System können Texte, bzw. Bilder am einzelnen Bedienpanel zum einen bei Bedarf, d. h. beispielsweise wenn das jeweilige Bild angewählt wird, und zum anderen automatisch bereitgestellt bzw. vorab automatisch lokal aktualisiert werden und zwar abhängig von den benötigten Aufschlagzeiten.

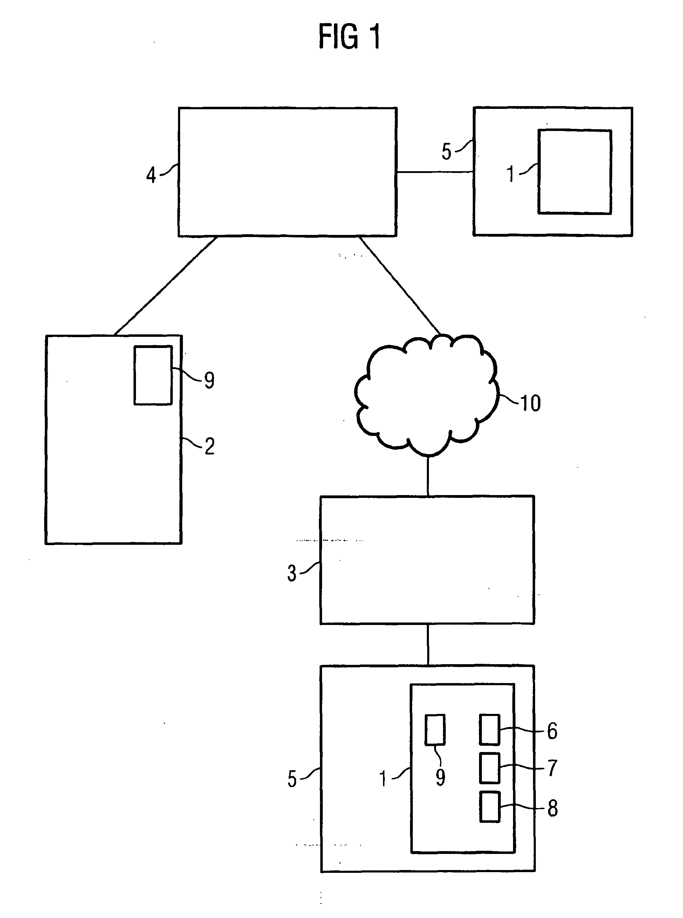

FIG 1 zeigt ein Ausführungsbeispiel eines erfindungsgemäßen Systems zur Bereitstellung von Informationen 1, welches eine Komponente 2 aufweist, sowie Bereitstellungsmittel 3, 4 zur Bereitstellung der der Komponente 2 zugeordneten Informationen 1. Die Informationen 1 sind in Speichermitteln 5 gespeichert. Die Bereitstellungsmittel 3, 4 haben Zugriff auf die in den Speichermitteln 5 gespeicherten Informationen. Den Informationen sind verschiedene Attribute 6, 7, 8 zugeordnet. Den Informationen 1 ist eine maximal zulässige Zugriffszeit als erstes Attribut 6 zugeordnet. Als zweites Attribut 7 ist den Informationen 1 eine minimal erforderliche Zugriffsverfügbarkeit zugeordnet und als drittes Attribut 8 ein Speicherplatzbedarf. Die Komponente 2 weist ein eindeutiges, automatisch erfassbares Identifikationsmerkmal 9 auf. Die Bereitstellungsmittel 3, 4 weisen eine Mensch-Maschine-Schnittstelle 4 auf. Die Bereitstellungsmittel 3, 4 nutzen das Internet 10, d. h. die Teile 3, 4 der Bereitstellungsmittel kommunizieren über das Internet. Die Speichermittel 5 sind gemäß Ausführungsbeispiel gemäß FIG 1 verteilt ausgeführt. So ist ein erstes Speichermittel 5 direkt mit der Mensch-Maschine-Schnittstelle 4 gekoppelt, wohingegen ein zweites Speichermittel 5 über das Bereitstellungsmittel 3 und das Internet 10 mit der Mensch-Maschine-Schnittstelle 4 verbunden ist. Ebenso könnten Speichermittel in der Komponente 2 selbst vorgesehen sein.

Die Informationen 1 können bei erhöhten Sicherheitsanforderungen verschlüsselt, bei knappem Speicherplatz in komprimierter Form gespeichert bzw. übertragen werden. Durch die Bereitstellungsmittel 3, 4 kann anhand des Identifikationsmerkmals 9 bzw. bei verschlüsselter Version anhand des entsprechenden Schlüssels eine automatische Überprüfung einer Lizenz bzw. Berechtigung für die komponentenspezifischen Informationen 1 erfolgen. Lizenzen und Benutzungsinformationen können selbst auch als Information gehandhabt werden, d. h. auf der jeweiligen Komponente, auf einer anderen Komponente oder in anderen Speichermitteln 5 im Netz gespeichert werden. Dies ermöglicht eine komponentenbezogene Lizenzierung für jederzeit verfügbare Informationen 1.

Es kann eine multidimensionale Beschreibung (z. B. mehrere Wörter) der Informationen 1 verwendet werden. In einem Ausführungsbeispiel wird eine dimensionalitätsreduzierende oder topologieerhaltende Abbildung verwendet, um die multidimensionale Beschreibung der Informationen 1 auf die Identifikationsmerkmale 9, die Komponenten 2 bzw. die Informationen 1 abzubilden.

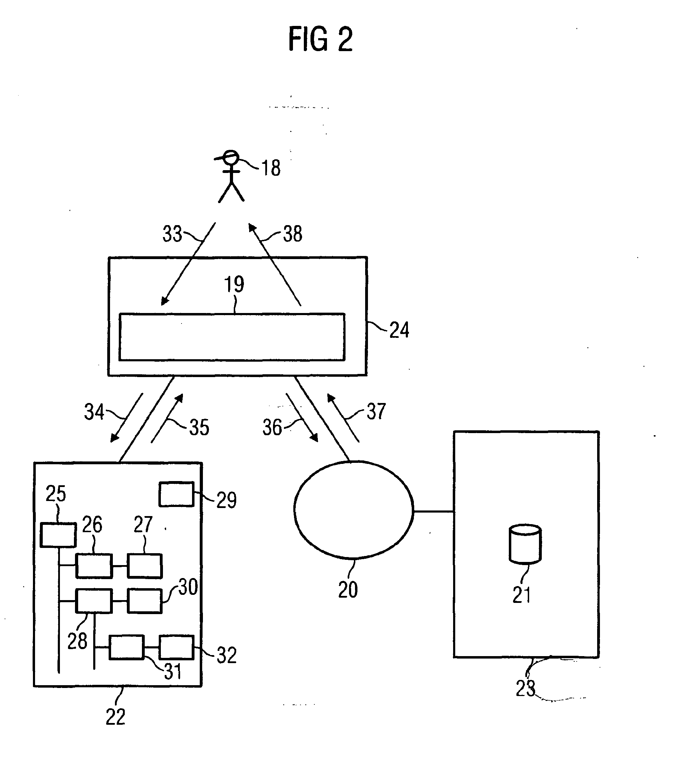

FIG 2 zeigt ein weiteres Ausführungsbeispiel der Erfindung, bei welchem die Bereitstellungsmittel eine Mensch-Maschine-Schnittstelle 24, z. B. einen Personal Computer (PC), einen Personal Digital Assistant (PDA) oder ein Mobiltelefon aufweisen. Die Mensch-Maschine-Schnittstelle 24 weist eine Software 19 auf. Die Software 19 kann z. B. als Engineering-, Bedien-, Service- oder Anwendungs-Software ausgeführt sein. Die Mensch-Maschine-Schnittstelle 24 dient als Schnittstelle zwischen einem Anwender 18, einer Komponente, welche als Automatisierungsgerät 22 eines industriellen Steuerungssystems ausgeführt ist, sowie dem Internet 20. Über das Internet 20 ist die Mensch-Maschine-Schnittstelle 24 mit einem weiteren Teil der Bereitstellungsmittel, einem Web Service 23 verbunden, welcher Zugriff auf Informationen 21 hat. Dazu stellt die Komponente z. B. ein auslesbares WSDL-Dokument zur Verfügung (WSDL = Web Services Description Language). Mit dem WSDL-Dokument wird der korrekte Web Service 23 für den Bezug der komponentenspezifischen Informationen 21 im Internet 20 gefunden. Der Service kann einen global eindeutigen Namen aufweisen, sodass der er direkt als Internet-Adresse und/oder Produktname verwendbar ist.

Das Automatisierungsgerät 22 weist ein Identifikationsmerkmal 29 auf. Das Identifikationsmerkmal 29 ist als RFID-Tag ausgeführt. Auf dem Automatisierungsgerät 22 läuft ein Steuerungsprogramm, welches einen Operationsbaustein 25, Datenbausteine 26 sowie Funktionsbausteine 28 aufweist. Den Datenbausteinen 26, den Funktionsbausteinen 28 sowie Alarmmeldungen 31 sind ebenfalls Identifikationsmerkmale 27, 30 bzw. 32 zugeordnet. Komponenten, denen ein Identifikationsmerkmal zugeordnet ist, werden auch als attributierte Komponenten bezeichnet.

Das Identifikationsmerkmal und die Attribute sind mit dem Automatisierungsgerät oder Teil des Automatisierungsgeräts verbunden bzw. am Gerät gespeichert. Die Attributierungsinformation ist automatisch auslesbar über einen oder mehrere der folgenden Zugänge: Radio Frequency Identification (RFID) Tag auf der Komponente, Body Network (ein Anwender berührt die Komponente, deren Attributierung/Projektierung er auf sein mobiles Programmiergerät übertragen will), wireless Probe (z. B. so genannter "Bluetooth Schraubenzieher" mit dem ein Bediener einen Kontakt auf der Komponente berührt), USB, Bluetooth, Web, LAN/WLAN/Industrial Ethernet/EtherCat, Profinet, RS486, Rückwandbus, Bar Code Scanner.

Anhand FIG 2 wird der Zugriff des Anwenders 18 auf die Informationen 21 erläutert. Der Anwender 18 greift in einem ersten Schritt 33 auf die Mensch-Maschine-Schnittstelle 24 zu und fordert eine dem Automatisierungsgerät 22 oder den Komponenten 26, 28, 31 zugeordnete Information an. In einem zweiten Schritt 34 wird die Anfrage an das Automatisierungsgerät gegeben, welches daraufhin in einem dritten Schritt 35 das entsprechende Identifikationsmerkmal 27, 29, 30 bzw. 32 an die Mensch-Maschine-Schnittstelle 24 zurückgibt, je nachdem, ob eine Information zum Automatisierungsgerät 22 oder zu den Komponenten 26, 28, 31 des Steuerungsprogramms angefragt wurde. Da die benötigte Information nicht direkt auf dem Automatisierungsgerät 22 verfügbar ist, gibt die Software 19 der Mensch-Maschine-Schnittstelle 24 in einem vierten Schritt 36 die Anfrage über das Internet 20 an den Web Service 23 weiter. Der Web Service 23 der Bereitstellungsmittel stellt daraufhin die exakt passenden Informationen 21 zu der jeweiligen durch das Identifikationsmerkmal zu identifizierenden Komponente zur Verfügung. Die Informationen 21 werden in einem fünften Schritt 37, wiederum über das Internet 20, an die Mensch-Maschine-Schnittstelle 24 zurückgegeben. Diese stellt die Informationen in einem sechsten Schritt 38 dem Anwender 18 zur Verfügung. Entsprechende Kommunikationsressourcen vorausgesetzt, erfolgt der gesamte Vorgang derart schnell, dass es für den Anwender 18 so aussieht, als würde die Information 21 direkt vom Automatisierungsgerät 22 geliefert. Die Informationen 21 werden somit in einem so genannten "Device Attached Virtual Storage" gespeichert. Für den Anwender 18 ist es nicht sichtbar, ob die Informationen 21 im Automatisierungsgerät 22, in der Mensch-Maschine-Schnittstelle 24 oder in über das Internet 20 zugänglichen Speichermitteln gespeichert sind.

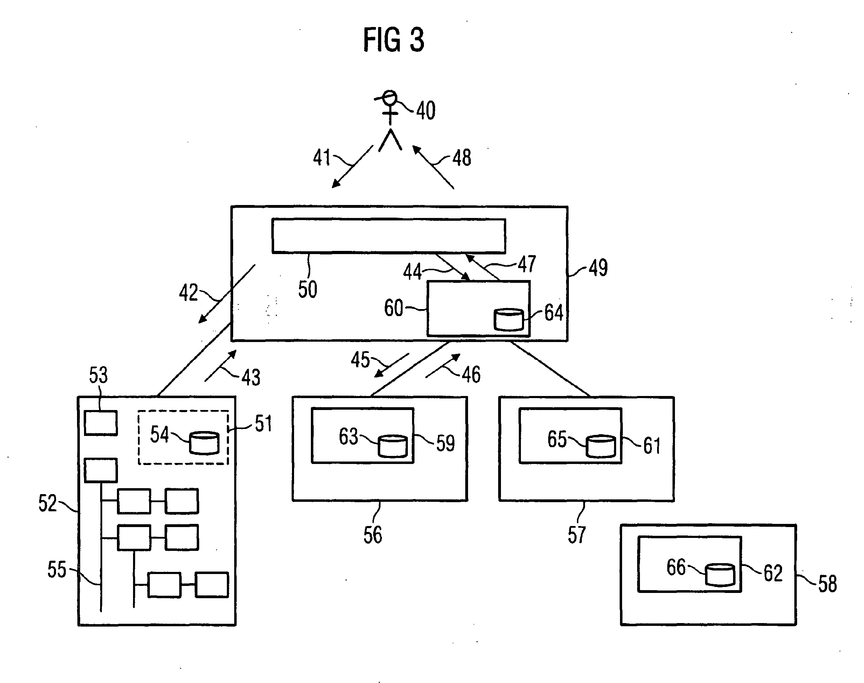

FIG 3 zeigt ein weiteres Ausführungsbeispiel der Erfindung, bei welchem die Bereitstellungsmittel als ein industrielles Peer-to-Peer-Netzwerk ausgeführt sind. Die Bereitstellungsmittel bzw. das Netzwerk weisen so genannte Information Sharing Clients 51, 59 - 62 auf, welche in Komponenten 49, 52, 56, 57, 58 enthalten sind. Die Clients stellen Informationen 54, 63 - 66 bereit. Die Komponente 52, z. B. ein Automatisierungsgerät, weist ein Identifikationsmerkmal 53 auf, sowie ein Steuerungsprogramm 55. Die Komponente 49 ist als Mensch-Maschine-Schnittstelle ausgeführt. Über die Mensch-Maschine-Schnittstelle 49 hat der Anwender 40 Zugang zum Peer-to-Peer-Netzwerk. Im Peer-to-Peer-Netzwerk sind die Informationen verteilt gespeichert. Der Zugriff auf die Informationen erfolgt über die Clients 51, 59 - 62. Auf der Mensch-Maschine-Schnittstelle 49 läuft eine Software 50.

Die Clients können auf keinem, einem, vielen oder allen Geräten bzw. Baugruppen des Automatisierungssystems implementiert sein, bzw. auf mobilen Geräten wie PC, PDA, Mobiltelefon. Mindestens ein Client muss im Netzwerk existieren (dieser Fall entspricht funktionell der Ausführung gemäß FIG 2). Clients liefern Funktionen zum Zugriff auf komponentenbezogene Informationen und zum Hinzufügen von Informationen zu Komponenten. Jeder Client speichert lokal einen Teil der Informationen und einen Teil eines Indexes zum Finden der Inhalte, d. h. die Funktion, die aus dem Identifikationsmerkmal den Speicherort (z. B. die IP-Adresse des Geräts, auf dem der Inhalt gespeichert ist) ermittelt, ist verteilt implementiert, z. B. mit einer verteilten Hash-Funktion. In einem Ausführungsbeispiel erfolgt der Zugriff auf die Komponente über Peer-to-Peer-Algorithmen, so dass ein zentraler Index nicht notwendig ist. Clients können Stellvertreter für Baugruppen sein, die entweder keinen Client beinhalten oder sich in Teilnetzen befinden, zu denen keine IP-Verbindung möglich ist (z. B. Feldbusse wie Profibus, Fieldbus). In diesem Fall verhält sich der Client bezüglich der Baugruppe, für die er Stellvertreter ist, so als würde er nur ein Zwischenknoten im Netz sein. Die physikalischen Verbindungen zwischen Clients beruhen z. B. auf einer der oben genannten Technologien. Die Mindestfunktion zur Teilnahme einer Baugruppe oder eines Geräts am Netz ist, dass ihr Identifikationsmerkmal bzw. die Identifikationsmerkmale der ihnen zugeordneten Informationen abgefragt werden können. Speicher für die Bereitstellung eigener Informationen sowie die Bereitstellung eigener Informationen ist optional. Jede Information kann prinzipiell von jedem Client aus anhand dessen Identifikationsmerkmal (bzw. Schlüssel) gefunden werden. Eine Anwendungssoftware, ein Programmiergerät u. Ä. kann prinzipiell über jeden im Netzwerk erreichbaren Client alle Informationen beziehen. D. h. eine Anfrage nach einer Information kann an jeden Client gerichtet sein, sie muss auch nicht von der Engineeringsoftware kommen, sondern kann als Reaktion auf die Anfrage von der Engineeringsoftware an das Automatisierungsgerät von diesem Automatisierungsgerät an den eigenen oder einen anderen Client gehen, bzw. direkt vom Anwender an den PC-lokalen Client. Jeder Client des Information Sharing Netzwerks sieht den ganzen Inhalt und muss sich nicht darum kümmern, auf welcher Komponente im System die Information gespeichert wird. Für spezielle Informationen können aber Lokalitätsbedingungen eingestellt werden (z. B. Objekt, Baugruppe, Station, Teilanlage).

Der Client für PC/PDA/Mobiltelefon zum Hinzufügen und Auslesen des Identifikationsmerkmals und der Informationen von den Komponenten kann von einem über ein Netzwerk zugänglichen Web Service selbst geliefert werden, z. B. für den Zugriff von einem PC, auf dem a priori nur ein Web Browser installiert ist.

Im Folgenden wird der Zugriff auf Informationen mit Hilfe des Peer-to-Peer-Netzwerks gemäß FIG 3 beschrieben. Der Anwender 40 erhält in einem ersten Schritt 41 Zugang zur Mensch-Maschine-Schnittstelle 49 und fordert Informationen zur Komponente 52 an. Die Anforderung wird in einem zweiten Schritt 42 an das Automatisierungsgerät 52 weitergegeben. Das Automatisierungsgerät 52 gibt daraufhin das Identifikationsmerkmal 53 in einem dritten Schritt 43 an die Mensch-Maschine-Schnittstelle 49. Die Software 50 gibt diese Anfrage in einem vierten Schritt 44 an den Client 60, welcher auf der Mensch-Maschine-Schnitt-Stelle implementiert ist. Der Client 60 stellt die Verbindung zum Client 59 her (Schritt 45), welcher die angeforderten Informationen 63 im nächsten Schritt 46 an den Client 60 der Mensch-Maschine-Schnittstelle 49 zurückliefert. Mit den Schritten 47 und 48 wird diese Information dem Anwender 40 bereitgestellt. Für den Anwender transparente Links führen von den Komponenten zu den Informationen im Netz. Die Links sind jedoch keine starren Internetadressen, sondern Identifikationsmerkmale bzw. Schlüssel der Komponenten im industriellen Peer-to-Peer-Overlay Netzwerk. Der Begriff Overlay-Netzwerk beschreibt ein, das auf ein bestehendes Netzwerk aufsetzt, in diesem Fall auf das physikalische Netzwerk. Dabei wird das Overlay-Netzwerk zum Aufbau einer zusätzlichen Topologie (z. B. physikalisch, logisch, strukturell) genutzt. Industriespezifische Ausprägungen der Protokolle im Overlay-Netzwerk realisieren die speziellen Anforderungen der industriellen Automatisierung, wie z. B. optimale Verteilung der Informationen auf die Speichermittel der Geräte in der Anlagenhierarchie, erzwungene Lokalität für spezielle Informationen auf Stationen oder Teilanlagen (und damit Autonomie bei Teilabschaltungen), hohe Verfügbarkeit der Informationen auch bei Rekonfiguration von Anlagen, Sicherheit gegen Datenverfälschung, Mithören, Sabotage, eine einfache Lizenzierung und eine deterministische Zugriffszeit.

Servicepersonal kann an beliebiger Stelle mit dem System kommunizieren und findet alle Informationen, nicht nur an speziellen Stellen wie dem Engineering System. Das Servicepersonal muss dazu die Netz-Adresse des Engineering System Servers bei Remote Zugriff nicht kennen, sondern nur einen Namen von den Informationen. Dies ist besonders für Remote Service von Vorteil.

Die Clients können auch Speichermittel als so genannten "Device Attached Virtual Private Storage" zur Verfügung stellen, so dass ein Teil der Projekte/Abteilungen/Anlagen ein gemeinsames Netzwerk nutzen kann, ohne auf die Daten der jeweils anderen Projekte/Abteilungen/Anlagen zugreifen zu können. In einem weiteren Ausführungsbeispiel ist das Interface des Clients nicht ein File System Interface, sondern ein Objekt-Interface, so dass auch hierarchische Bäume von Objekten im Information Sharing Netzwerk auf den Komponenten des Automatisierungssystems gespeichert werden können. In einem weiteren Ausführungsbeispiel ist das Interface des Clients so gestaltet, dass Speichern der Daten auf Basis einer Sprache für Semantic Web z. B. RDF (Resource Description Framework) und komplexe bzw. zusammengesetzte Abfragen möglich sind (z. B. "select PLC where Type = 417-4H"). Es erfolgt ein "Semantic Information Sharing" innerhalb des Automatisierungssystems.

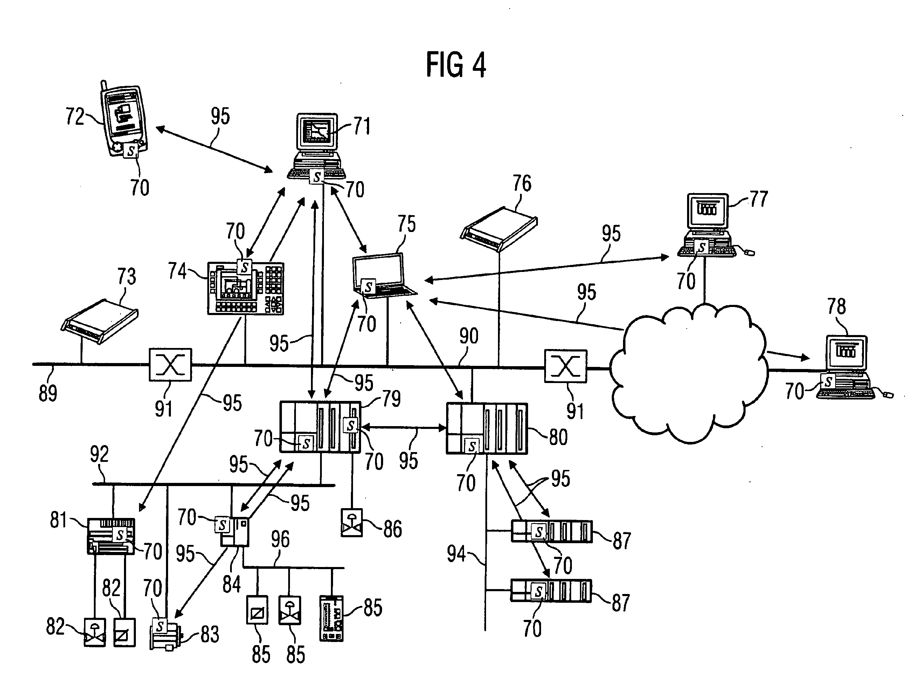

FIG 4 zeigt die Vernetzung von Clients 70 auf Baugruppen und Geräten eines Automatisierungssystems in einem selbst organisierenden Overlay Netzwerk. Die Clients 70 sind in diversen Komponenten 71 - 88 implementiert. Die Komponenten 71 - 88 sind über geeignete Kommunikationsnetzwerke 89, 90, 93, 94 miteinander verbunden. Die Overlay-Verbindungen sind mit dem Bezugszeichen 95 gekennzeichnet. Koppelelemente 91 stellen die Verbindung zwischen den Netzen 89, 90, 93 her. Die im Netzwerk beteiligten Komponenten sind beispielsweise ein Rechner 71 zum Bedienen und Beobachten, ein Personal Digital Assistant 72, Telekommunikationsgeräte 73, 76, ein HMI-Panel 74 (HMI = Human Machine Interface), ein Notebook 75, ein Personal Computer 77, ein globaler Server 78, eine speicherprogrammierbare Steuerung 79, 80, 87, 88 eines industriellen Automatisierungssystems, Ein-/Ausgabebaugruppen 81, 84 und Peripheriekomponenten 82, 83, 85, z. B. Sensoren/Aktoren. Die Kommunikationsnetze sind ausgeführt als Feldbussystem 96, als TCP/IP-basierte Bussysteme 89, 90, 92 und als WAN (Wide Area Network) oder Internet 93.

Bei der Vernetzung der Clients werden automatisierungsspezifische Kennzeichen berücksichtigt. So wird die Struktur des Overlay-Netzwerks zwischen den Clients unter Berücksichtigung der in der Anlage vorkommenden physikalischen Netzwerkstrukturen z. B. so aufgebaut, dass das Overlay-Netzwerk entlang der hierarchischen Strukturen der physikalischen Netzwerke verläuft. Kommt ein neuer Client ins Netz, z. B. durch Stecken der entsprechenden Baugruppe, verbindet er sich zu einem bereits vorhandenen durch Konfiguration bzw. fest vorgegebenen Client (z. B. Engineering-Server, globaler Unternehmens-Server), besorgt sich über diesen Client die Beschreibung der Architektur des physikalischen Netzes in der Anlage, die Ressourcenbedingungen von Geräten und Verbindungen (z. B. Hardware Config) sowie die Adressen von anderen Clients und bestimmt darüber den oder die anderen Clients, zu denen er sich im Overlay-Netzwerk verbindet. Nach dem Hinzufügen eines neuen Clients oder nach Veränderung der vom Client zur Verfügung gestellten Informationen teilt der Client die Identifikationsmerkmale dieser Informationen mindestens einem im physikalischen Netzwerk der Anlage hierarchisch höher liegenden Client mit.

Beim Hinzufügen von Informationen in das Information Sharing Netzwerk interpretieren die Clients neben den Informationen im Overlay-Netzwerk über die Netzwerktopologie des Automatisierungssystems, die lokalen Speichermittel der Komponenten und die Konfigurationsdaten der Komponenten auch die Attribute der den Komponenten bzw. den Speichermitteln hinzuzufügenden Informationen und optimieren damit den Speicherort der jeweiligen Informationen. Die Festlegung des Speicherorts der Informationen in den Speichermitteln erfolgt in Abhängigkeit des ersten Attributs, so dass die vorgegebene Geschwindigkeit des Datenzugriffs erreicht wird, z. B. durch Cachen bei einem lokalen Client der konsumierenden Applikation/Client (so schnell wie möglich bzw. beim ersten Zugriff), durch Ablegen 1, 2, n Hops entfernt oder durch Ablegen in Speichermitteln der Komponente zu dem die Informationen gehören. Die den Informationen als zweites Attribut zugeordnete minimal erforderliche Zugriffsverfügbarkeit wird z. B. erreicht durch 1-, 2-, n-faches Ablegen in verschiedenen, insbesondere verteilten Speichermitteln im Netz, durch Ablegen in verschiedenen topologischen Segmenten eines unterlagerten physikalischen Netzes. Eine den Informationen zugeordnete Anlagenlokalität wird durch entsprechendes Ablegen auf der Baugruppe, der Station, Fertigungslinie, Teilanlage erreicht oder durch Ablegen einer redundanten Kopie in einem gewissen Mindestabstand (z. B. für explosionsgefährdete Bereiche).

In einem Ausführungsbeispiel wird vor dem Ziehen einer Baugruppe auf der Baugruppe "sicheres Ziehen" eingestellt, z. B. durch einen Schalter. Damit werden die auf der Baugruppe gespeicherten Daten bzw. Teile des Indexes in das restliche Netzwerk geschrieben. Eine eventuell vorhandene Datenredundanz im Information Sharing Network wird somit auch bei Ziehen von Baugruppen ununterbrochen garantiert. Veränderungen der Anlage sind somit wesentlich einfacher möglich. Baugruppen können einfach gesteckt werden und finden ihr Engineering System immer selbständig. Baugruppen können einfach gezogen werden, das restliche System rekonfiguriert sich bezüglich Datenhaltung im Information Sharing Netzwerk vollautomatisch, so dass die gleiche Qualität der Datenverfügbarkeit auch nach Rekonfiguration weiter vorhanden ist (solange genügend Speicher im Netzwerk vorhanden ist). Ein Baugruppentausch ist somit schneller durchführbar.

Durch die Erfindung wird die Übertragung der elektronischen Inhalte (z.B. Beschreibung, Anleitung, Engineering-Software, Trainingsvideos etc.) über Feld- und Peripheriebusse vermieden. Die Busse können niedrige Übertragungsraten beibehalten, obwohl große Mengen an baugruppenspezifischem Informationen jederzeit quasi "von der Baugruppe" abrufbar sind.

Mit Hilfe des beschriebenen "Attached Virtual Storage", der physikalisch außerhalb der Baugruppen liegt, können auch bestehende Anlagen, in deren Baugruppen kaum Speicherplatz vorhanden ist, um neue Features wie Projektserver, Webpages, Selbstbeschreibung, Plug and Play erweitert werden (sofern ein Client integrierbar ist).

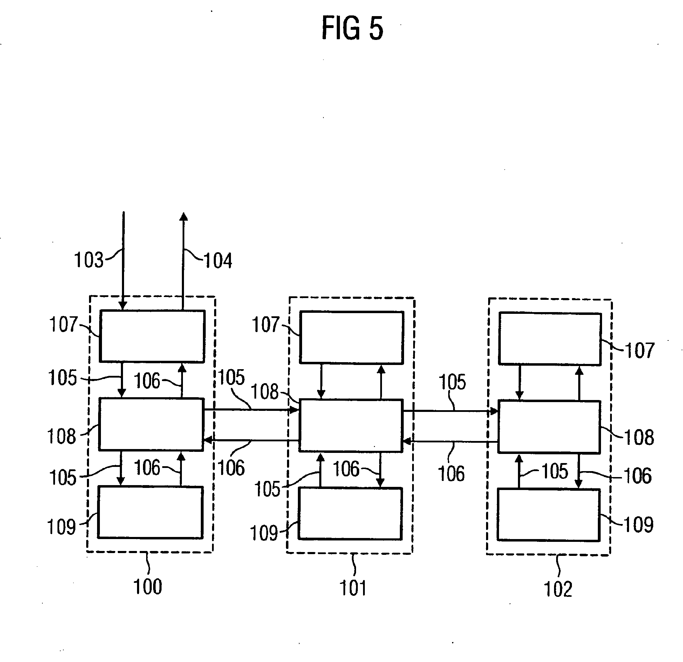

FIG 5 zeigt die Aufteilung von einzelnen Informationen in Blöcke, sowie die Verteilung von Blöcken zu verschiedenen Geräten im Automatisierungssystem. Die Clients sind mit den Bezugszeichen 100, 101 bzw. 102 bezeichnet. Über ein so genanntes File System Interface 107 ist eine Anfrage 103 möglich, welche zur Bereitstellung einer Information 104 führt. Dabei wird ein Schlüssel 105 bzw. ein Identifikationsmerkmal im System durch Ortsbestimmungsmittel 108 an Speichermittel 109 weitergegeben. Die Speichermittel 109 stellen Speicherblöcke 106 zur Verfügung bzw. speichern diese ab. Durch den jeweiligen Client 100 - 102 erfolgt beim Speichern von Informationen eine Aufteilung in Blöcke 106, wobei dann die Blöcke 106 durch das Ortsbestimmungsmittel 108 auf verschiedene Clients verteilt werden. Beim Zugriff integriert das File System Interface 107 des Clients die Blöcke.

Zusammengefasst betrifft die Erfindung somit ein System sowie ein Verfahren zur Speicherung und Bereitstellung von Informationen. Das System weist mindestens eine Komponente 2, Bereitstellungsmittel 3, 4 zur Bereitstellung von der Komponente 2 zugeordneten Informationen 1 und Speichermittel 5 zur Speicherung der Informationen 1 auf, wobei die Bereitstellungsmittel 3, 4 Zugriff auf die mit den Speichermitteln 5 gespeicherten Informationen 1 haben und wobei die Bereitstellungsmittel 3, 4 zur Bereitstellung der Informationen 1 innerhalb einer Zugriffszeit vorgesehen sind. Um die Bereitstellung der Informationen zu vereinfachen und gleichzeitig Zugriffsbedingungen einzuhalten, sind die Speichermittel 5 für der Komponente 2 zugeordnete Informationen 1 von der Komponente 2 entfernt angeordnet sind, weisen die Komponenten 2 und/oder die Informationen 1 mindestens ein automatisch lesbares Identifikationsmerkmal 9 auf und ist den Informationen 1 mindestens ein Attribut 6 zuordenbar, wobei das Attribut 6 einen Zugriffsparameter beinhaltet.

## Patentansprüche

1. System zur Speicherung und Bereitstellung von komponentenbezogenen Informationen, mit
mindestens einer Komponente (2) eines industriellen Automatisierungssystems,
mit Speichermitteln (5) zur Speicherung der komponentenbezogenen Informationen (1),
mit Bereitstellungsmitteln (3, 4), wobei die Bereitstellungsmittel (3, 4) Zugriff auf die mit den Speichermitteln (5) gespeicherten komponentenbezogenen Informationen (1) haben, wobei die Bereitstellungsmittel (3, 4) zur Bereitstellung der komponentenbezogenen Informationen (1) innerhalb einer Zugriffszeit vorgesehen sind,
**dadurch gekennzeichnet,**
**dass** die Speichermittel (5) für der mindestens einen Komponente (2) des industriellen Automatisierungssystems zugeordnete komponentenbezogene Informationen (1) von der Komponente (2) entfernt angeordnet sind,
**dass** die Komponenten (2) und/ oder die komponentenbezogenen Informationen (1) mindestens ein automatisch lesbares Identifikationsmerkmal (9) aufweisen, und
**dass** den komponentenbezogenen Informationen (1) mindestens ein einen Zugriffsparameter beschreibendes Attribut (6) zugeordnet ist, nach dessen Massgabe die Bereitstellung der komponentenbezogenen Informationen in Abhängigkeit von ihrer Art erfolgt.

2. System nach Anspruch 1,
**dadurch gekennzeichnet,**
**dass** der Zugriffsparameter eine maximal zulässige Zugriffszeit, eine minimal erforderliche Zugriffsverfügbarkeit, eine topologische Zugehörigkeit und/oder einen erforderlichen Speicherplatz der Informationen (1) bestimmt.

3. System nach Anspruch 1 oder 2,
**dadurch gekennzeichnet,**
**dass** die Speichermittel (5) des Systems für Informationen (1) in Abhängigkeit von den zugeordneten Attributen (6) durch das System automatisch festlegbar sind.

4. System nach einem der vorhergehenden Ansprüche,
**dadurch gekennzeichnet,**
**dass** die Bereitstellungsmittel (3, 4) in Abhängigkeit von den Attributen (6) durch das System automatisch parametriert sind.

5. System nach einem der vorhergehenden Ansprüche,
**dadurch gekennzeichnet,**
**dass** das Identifikationsmerkmal (9), die Attribute (6) und/ oder die Informationen (1) in XML codiert sind

6. System nach einem der vorhergehenden Ansprüche,
**dadurch gekennzeichnet,**
**dass** das Identifikationsmerkmal (9) als Radio Frequency Identification Tag ausgeführt ist.

7. System nach einem der vorhergehenden Ansprüche,
**dadurch gekennzeichnet,**
**dass** Mittel zur Zuordnung der Informationen (1) zu den Komponenten (2) vorhanden sind.

8. System nach einem der vorhergehenden Ansprüche,
**dadurch gekennzeichnet,**
**dass** die Bereitstellungsmittel (3, 4) eine Mensch-Maschine-Schnittstelle (4) aufweisen.

9. System nach einem der vorhergehenden Ansprüche,
**dadurch gekennzeichnet,**
**dass** die Bereitstellungsmittel (3, 4) ein Internet (10) nutzen.

10. System nach einem der vorhergehenden Ansprüche,
**dadurch gekennzeichnet,**
**dass** die Bereitstellungsmittel (3, 4) einen Web Service aufweisen.

11. System nach einem der vorhergehenden Ansprüche,
**dadurch gekennzeichnet,**
**dass** die Bereitstellungsmittel (3, 4) als Peer-to-Peer-Netzwerk ausgeführt sind.

12. System nach einem der vorhergehenden Ansprüche,
**dadurch gekennzeichnet,**
**dass** die Informationen (1) verteilt auf mehrere Speichermittel (5) gespeichert sind.

13. System nach einem der vorhergehenden Ansprüche,
**dadurch gekennzeichnet,**
**dass** Speichermittel (5) auf Komponenten verteilt sind.

14. System nach einem der vorhergehenden Ansprüche,
**dadurch gekennzeichnet,**
**dass** die Informationen (1) Nicht-Echtzeit-Daten sind

15. System nach einem der vorhergehenden Ansprüche,
**dadurch gekennzeichnet,**
**dass** die Informationen (1) Lizenzierungsdaten sind.

16. System nach einem der vorhergehenden Ansprüche,
**dadurch gekennzeichnet,**
**dass** die Informationen (1) redundant gespeichert sind.

17. System nach einem der vorhergehenden Ansprüche,
**dadurch gekennzeichnet,**
**dass** die Informationen (1) verschlüsselt gespeichert sind.

18. System nach einem der vorhergehenden Ansprüche,
**dadurch gekennzeichnet,**
**dass** die Informationen (1) transaktional übertragen sind.

19. System nach einem der vorhergehenden Ansprüche,
**dadurch gekennzeichnet,**
**dass** die Informationen (1) zu Verarbeitungsmitteln zur Verarbeitung und/oder Anzeige der Informationen (1) zuordenbar sind und den Informationen (1) je Verarbeitungsmittel mindestens ein Attribut zuordenbar ist, wobei das Attribut (6) einen Zugriffsparameter darstellt.

20. Verfahren zur Speicherung und Bereitstellung von komponentenbezogenen Informationen mindestens einer Komponenten eines industriellen Automatisierungssystems, bei welchem mit Bereitstellungsmitteln (3, 4) komponentenbezogenen Informationen (1) innerhalb einer Zugriffszeit bereitgestellt werden, wobei die komponentenbezogenen Informationen (1) mit Speichermitteln (5) gespeichert werden, wobei die Bereitstellungsmittel (3, 4) Zugriff auf die mit den Speichermitteln (5) gespeicherten Informationen (1) haben,
**dadurch gekennzeichnet,**
**dass** die Speichermittel (5) für der mindestens einen Komponente (2) des industriellen Automatisierungssystems zugeordnete komponentenbezogene Informationen (1) von der Komponente (2) entfernt angeordnet werden,
**dass** die Komponenten (2) und/oder die komponentenbezogenen Informationen (1) mindestens ein automatisch lesbares Identifikationsmerkmal (9) aufweisen und
**dass** den komponentenbezogenen Informationen (1) mindestens ein einen Zugriffsparameter beschreibendes Attribut (6) zugeordnet wird, nach dessen Massgabe die Bereitstellung der komponentenbezogenen Informationen in Abhängigkeit von ihrer Art gesteuert wird.

21. Verfahren nach Anspruch 20,
**dadurch gekennzeichnet,**
**dass** der Zugriffsparameter eine maximal zulässige Zugriffszeit, eine minimal erforderliche Zugriffsverfügbarkeit, eine topologische Zugehörigkeit und/oder einen erforderlichen Speicherplatz der Informationen (1) bestimmt.

22. Verfahren nach Anspruch 20 oder 21,
**dadurch gekennzeichnet,**
**dass** die Speichermittel (5) des Systems für Informationen (1) in Abhängigkeit von den zugeordneten Attributen (6) durch das System automatisch festgelegt werden.

23. Verfahren nach einem der Ansprüche 20 bis 22,
**dadurch gekennzeichnet,**
**dass** die Bereitstellungsmittel (3, 4) in Abhängigkeit von den Attributen (6) durch das System automatisch parametriert werden.

## Claims

1. System for storing and providing component-related information, having
at least one component (2) of an industrial automation system,
having storage means (5) for storing the component-related information (1),
having provision means (3, 4), wherein the provision means (3, 4) have access to the component-related information (1) stored using the storage means (5), wherein the provision means (3, 4) are provided for the purpose of providing the component-related information (1) within an access time,
**characterized**
**in that** the storage means (5) for component-related information (1) which is associated with the at least one component (2) of the industrial automation system are arranged remotely from the component (2),
**in that** the components (2) and/or the component-related information (1) has/have at least one automatically readable identification feature (9), and
**in that** the component-related information (1) has at least one associated attribute (6) which describes an access parameter and according to which the component-related information is provided on the basis of the nature thereof.

2. System according to Claim 1,
**characterized**
**in that** the access parameter determines a maximum permissible access time, a minimum required access availability, a topological association and/or a required storage space for the information (1).

3. System according to Claim 1 or 2,
**characterized**
**in that** the storage means (5) in the system can be automatically stipulated for information (1) by the system on the basis of the associated attributes (6).

4. System according to one of the preceding claims,
**characterized**
**in that** the provision means (3, 4) are automatically parameterized by the system on the basis of the attributes (6).

5. System according to one of the preceding claims,
**characterized**
**in that** the identification feature (9), the attributes (6) and/or the information (1) are encoded in XML.

6. System according to one of the preceding claims,
**characterized**
**in that** the identification feature (9) is in the form of a radio/frequency identification tag.

7. System according to one of the preceding claims,
**characterized**
**in that** means for associating the information (1) with the components (2) are present.

8. System according to one of the preceding claims,
**characterized**
**in that** the provision means (3, 4) have a man/machine interface (4).

9. System according to one of the preceding claims,
**characterized**
**in that** the provision means (3, 4) use an Internet (10).

10. System according to one of the preceding claims,
**characterized**
**in that** the provision means (3, 4) have a web service.

11. System according to one of the preceding claims,
**characterized**
**in that** the provision means (3, 4) are in the form of a peer-to-peer network.

12. System according to one of the preceding claims,
**characterized**
**in that** the information (1) is stored in a manner distributed over a plurality of storage means (5).

13. System according to one of the preceding claims,
**characterized**
**in that** storage means (5) are distributed over components.

14. System according to one of the preceding claims,
**characterized**
**in that** the information (1) is non-real-time data.

15. System according to one of the preceding claims,
**characterized**
**in that** the information (1) is licensing data.

16. System according to one of the preceding claims,
**characterized**
**in that** the information (1) is stored redundantly.

17. System according to one of the preceding claims,
**characterized**
**in that** the information (1) is stored in encrypted form.

18. System according to one of the preceding claims,
**characterized**
**in that** the information (1) is transmitted transactionally.

19. System according to one of the preceding claims,
**characterized**
**in that** the information (1) can be associated with processing means for processing and/or displaying the information (1) and it is possible for the information (1) to be allocated at least one attribute per processing means, wherein the attribute (6) is an access parameter.

20. Method for storing and providing component-related information from at least one component of an industrial automation system, in which provision means (3, 4) are used to provide component-related information (1) within an access time, wherein the component-related information (1) is stored using storage means (5), wherein the provision means (3, 4) have access to the information (1) stored using the storage means (5),
**characterized**
**in that** the storage means (5) for component-related information (1) associated with the at least one component (2) of the industrial automation system are arranged remotely from the component (2),
**in that** the components (2) and/or the component-related information (1) has/have at least one automatically readable identification feature (9), and
**in that** the component-related information (1) is allocated at least one attribute (6) which describes an access parameter and according to which the provision of the component-related information is controlled on the basis of the nature thereof.

21. Method according to Claim 20,
**characterized**
**in that** the access parameter determines a maximum permissible access time, a minimum required access availability, a topological association and/or a required storage space for the information (1).

22. Method according to Claim 20 or 21,
**characterized**
**in that** the storage means (5) in the system are automatically stipulated for information (1) by the system on the basis of the associated attributes (6).

23. Method according to one of Claims 20 to 22,
**characterized**
**in that** the provision means (3, 4) are automatically parameterized by the system on the basis of the attributes (6).

## Revendications

1. Système de mémorisation et de mise à disposition d'informations se rapportant à des composants, comprenant au moins un composant 2 d'un système d'automatisation industriel,
comprenant des moyens (5) de mémorisation pour la mémorisation des informations (1) se rapportant à des composants,
comprenant des moyens (3, 4) de mise à disposition, les moyens ( 3, 4) de mise à disposition ayant accès aux informations ( 1) se rapportant aux composants mémorisés par les moyens ( 5 ) de mémorisation, les moyens ( 3, 4 ) de mise à disposition étant prévus pour la mise à disposition des informations ( 1 ) se rapportant aux composants à l'intérieur d'un temps d'accès,
**caractérisé,**
**en ce que** les moyens (5) de mémorisation des informations ( 1 ) se rapportant aux composants associés au au moins un composant ( 2 ) du système d'automatisation industriel sont disposés en étant éloignés du composant ( 2 ),
**en ce que** les composants ( 2 ) et/ou les informations ( 1 ) se rapportant aux composants ont au moins une caractéristique ( 9 ) d'identification pouvant être lue automatiquement, et
**en ce qu'**aux informations ( 1 ) se rapportant aux composants est associé au moins un attribut (6) , qui décrit un paramètre d'accès, et en raison duquel la mise à disposition des informations rapportées aux composants s'effectue en fonction de leur type.

2. Système suivant la revendication 1, **caractérisé en ce que** le paramètre d'accès détermine un temps d'accès admissible au maximum, une disponibilité d'accès nécessaire au minimum, une appartenance topologique et/ou un emplacement de mémoire nécessaire des informations ( 1 ).

3. Système suivant la revendication 1 ou 2, **caractérisé en ce que** les moyens ( 5 ) de mémoire du système peuvent être fixés automatiquement par le système pour des informations ( 1 ) en fonction des attributs ( 6 ) associés.

4. Système suivant l'une des revendications précédentes, **caractérisé en ce que** les moyens ( 3, 4) de mise à disposition sont paramétrés automatiquement par le système en fonction des attributs.

5. Système suivant l'une des revendications précédentes, **caractérisé en ce que** la caractéristique ( 9 ) d'identification, les attributs ( 6) et/ou les informations ( 1 ) sont codés en XML.

6. Système suivant l'une des revendications précédentes, **caractérisé en ce que** la caractéristique ( 9 ) d'identification est réalisée sous la forme d'une Radio Frequenty Identification Tag.

7. Système suivant l'une des revendications précédentes, **caractérisé en ce qu'**il y a des moyens d'association des informations ( 1 ) aux composants ( 2 ).

8. Système suivant l'une des revendications précédentes, **caractérisé en ce que** les moyens 3, 4) de mise à disposition comportent une interface ( 4 ) homme-machine.

9. Système suivant l'une des revendications précédentes, **caractérisé en ce que** les moyens (3, 4 ) de mise à disposition utilisent l'Internet ( 10 ).

10. Système suivant l'une des revendications précédentes, **caractérisé en ce que** les moyens (3, 4 ) de mise à disposition comportent un service Web.

11. Système suivant l'une des revendications précédentes, **caractérisé en ce que** les moyens ( 3, 4 ) de mise à disposition sont réalisés en réseau peer to peer.

12. Système suivant l'une des revendications précédentes, **caractérisé en ce que** les informations ( 1 ) sont mémorisées en étant réparties sur plusieurs moyens ( 5 ) de mémoire.

13. Système suivant l'une des revendications précédentes, **caractérisé en ce que** les moyens ( 5 ) de mémoire sont répartis sur des composants.

14. Système suivant l'une des revendications précédentes, **caractérisé en ce que** les informations ( 1 ) sont des données qui ne sont pas en temps réel.

15. Système suivant l'une des revendications précédentes, **caractérisé en ce que** les informations ( 1 ) sont des données de licence.

16. Système suivant l'une des revendications précédentes, **caractérisé en ce que** les informations ( 1 ) sont mémorisées de manière redondante.

17. Système suivant l'une des revendications précédentes, **caractérisé en ce que** les informations ( 1 ) sont mémorisées en étant chiffrées.

18. Système suivant l'une des revendications précédentes, **caractérisé en ce que** les informations ( 1 ) sont transmises en transaction.

19. Système suivant l'une des revendications précédentes, **caractérisé en ce que** les informations ( 1 ) peuvent être associées à des moyens de traitement pour le traitement et/ou l'affichage des informations ( 1 ) et pour chaque moyen de traitement au moins un attribut peut être associé aux informations ( 1 ), l'attribut ( 6 ) représentant un paramètre d'accès.

20. Procédé de mémorisation et de mise à disposition d'information se rapportant à des composants d'au moins un composant d'un système d'automatisation industriel dans lequel, par des moyens ( 3, 4 ) de mise à disposition, on met à disposition dans un temps d'accès des informations ( 1 ) se rapportant aux composants, les informations (1) se rapportant aux composants étant mémorisées par des moyens ( 5 ) de mémorisation, les moyens ( 3, 4 ) de mise à disposition ayant accès aux informations ( 1 ) mémorisées par les moyens ( 5 ) de mémorisation
**caractérisé**
**en ce que** les moyens ( 5 ) de mémorisation des informations ( 1 ) se rapportant aux composants associés au au moins un composant ( 2 ) du système d'automatisation industriel sont disposés en étant éloignés du composant ( 2 ),
**en ce que** les composants ( 2 ) et/ou les informations ( 1 ) se rapportant aux composants ont au moins une caractéristique ( 9 ) d'identification pouvant être lue automatiquement, et
**en ce que**, on associe aux informations ( 1 ) se rapportant à des composants au moins un attribut ( 6 ), qui décrit un paramètre d'accès, et en raison duquel on commande la mise à disposition des informations se rapportant aux composants en fonction de leur type.

21. Procédé suivant la revendication 20, **caractérisé en ce que** le paramètre d'accès détermine un temps d'accès admissible au maximum, une disponibilité d'accès nécessaire au minimum, une appartenance topologique et/ou un emplacement de mémoire nécessaire des informations ( 1 ).

22. Procédé suivant la revendication 20 ou 21, **caractérisé en ce que** les moyens ( 5 ) de mémorisation du système sont fixés automatiquement par le système pour les informations ( 1 ) en fonction des attributs ( 6 ) associés.

23. Procédé suivant l'une des revendications 20 à 22, **caractérisé en ce que** des moyens ( 3, 4 ) de mise à disposition sont paramétrés automatiquement par le système en fonction des attributs ( 6 ).
